(19) **Europäisches Patentamt / European Patent Office / Office européen des brevets**

(11) **EP 3 218 752 B1**

(12) **EUROPEAN PATENT SPECIFICATION**

(45) Date of publication and mention
of the grant of the patent:
**07.04.2021 Bulletin 2021/14**

(21) Application number: **15790762.7**

(22) Date of filing: **23.10.2015**

(51) Int Cl.:
**G02B 6/38** (2006.01)

(86) International application number:
**PCT/US2015/057050**

(87) International publication number:
**WO 2016/077054 (19.05.2016 Gazette 2016/20)**

(54) **APPARATUS AND METHOD FOR TERMINATING AND TESTING CONNECTORS**

VORRICHTUNG UND VERFAHREN ZUM ABSCHLIESSEN UND TESTEN VON VERBINDERN

APPAREIL ET PROCÉDÉ DE TERMINAISON ET DE TEST DE CONNECTEURS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.11.2014 US 201462077433 P
22.10.2015 US 201514920270**

(43) Date of publication of application:
**20.09.2017 Bulletin 2017/38**

(73) Proprietor: **Panduit Corp.
Tinley Park, IL 60487 (US)**

(72) Inventors:
• **PIMPINELLA, Richard J.
Frankfort, Illinois 60423 (US)**

• **CASTRO, Jose M.
Lombard, Illinois 60148 (US)**
• **HUANG, Yu
Orland Park, Illinois 60462 (US)**
• **KOSE, Bulent
Burr Ridge, Illinois 60527 (US)**

(74) Representative: **Harden, Henry Simon et al
Kilburn & Strode LLP
Lacon London
84 Theobalds Road
London WC1X 8NL (GB)**

(56) References cited:
**EP-A2- 1 014 070        US-A1- 2007 147 741
US-A1- 2011 122 401      US-B1- 6 677 591
US-B2- 7 192 195**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

CROSS-REFERENCE TO RELATED APPLICATIONS

This application claims the benefit of U.S. Provisional Patent Application No.: 62/077,433 filed on November 10, 2014.

FIELD OF INVENTION

The present invention generally relates to the field of optical fiber splicing, and more specifically, to apparatuses and methods directed to mechanical splice termination and evaluation of resulting splice joints.

BACKGROUND

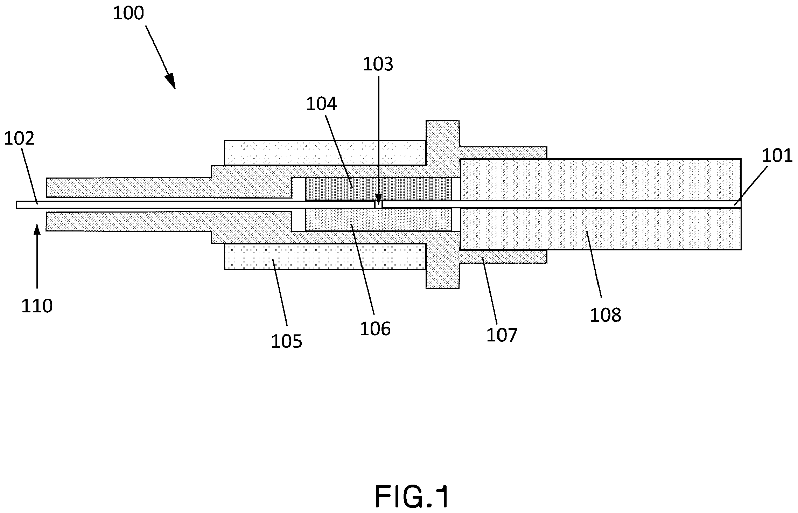

When working in the field of fiber optics, users are often required to establish connections between non-connectorized ends of optical fibers or fiber ribbons. This is generally referred to as splicing and typically involves creating temporary or permanent joints between two (or sometimes more) fibers. In certain instances, the two fibers are precisely aligned and then fused together using localized intense heat often times created with an electric arc. This is referred to as fusion splicing and is widely employed to create high performance permanent joints between two optical fibers. However, a fusion splicer apparatus can be bulky, expensive, and relatively fragile. Alternatively, the two fibers may simply abut one another in an alignment fixture often referred to as a mechanical splice. The alignment fixture may be an alignment tube or V-groove which receives two ends of separate fibers on either side and has the means to physically secure the fibers. In other instances, the alignment device may be a fiber optic connector with a stub fiber embedded therein made to be connectorized to a field fiber. In this case the field fiber can be terminated utilizing a mechanical splice to the stub fiber inside the connector. An example of the fiber optic connector with an embedded stub fiber is illustrated in Fig. 1.

To avoid loss of signal and reduce the potential reflectance or light leakage within these joints, users must ensure that the fiber(s) are properly cleaved, that there is precise alignment between the fibers, and that transparent gel or optical adhesive applied between the fibers matches the optical properties of the glass. However, these details are not always easy to detect and/or ensure. Therefore, there is a continued need for apparatuses and methods directed towards helping to determine and improve the quality of mechanical splices and provide improved termination of fibers such as field fibers.

US 2011122401 A1 discloses a method and apparatus for verifying the termination quality of an optical fiber interface in a fiber optic connector. The test apparatus generally comprises a light source providing light to a test connector which contains an interface of a stub fiber of a fiber optic connector and a field fiber of a fiber optic cable. The portions of the test connector that are located between the optical fiber optic interface and the light detector are transmissive while other portions of the test connector located near the interface are highly reflective.

SUMMARY

The invention is defined by the appended independent claims. Further preferred embodiments are set out in the dependent claims.

BRIEF DESCRIPTION OF THE DRAWINGS

Fig. 1 illustrates a side cut-away view of a field terminated fiber optic connector with a stub fiber.
Fig. 2 illustrates a side cut-away view of an embodiment of the present invention.
Fig. 3 illustrates a flow chart representing a method for terminating a field fiber according to an aspect of the present disclosure.
Fig. 4 illustrates a negative of a digital image of test connector with a light source turned on and a field fiber partially inserted.
Figs. 5A - 5L illustrate negative digital images of exemplary field fiber and stub fiber connector terminations.
Fig. 6 illustrates a flow chart representing a method for terminating a field fiber according to an aspect of the present disclosure.
Figs. 7A - 7L illustrate negative digital images of the connectors shown in Figs. 5A - 5L, respectively, converted to bit level patterns.

Figs. 8A - 8L illustrate various parameters for the connectors shown in digital images of Figs. 7A - 7L, respectively. Figs. 9A - 9C illustrate metrics $R1$, $R2$, and $U_m$, respectively as a function of insertion loss for test connector evaluation.

DETAILED DESCRIPTION

As used herein, the term "metric" shall be understood to mean any mathematical relationship which represents the behavior or optical radiation at any desired point or any desired collection of points within a particular fiber optic connector as it relates to the connector's insertion loss. In at least some embodiments of the present invention, the selected metrics have a relatively high correlation to the connector's insertion loss. Furthermore, for the sake of convenience and ease of visualization, digital images reproduced herein have been presented as negatives rather than positives.

Mechanical splicing can occur when a field optical fiber is connectorized to a pre-manufactured fiber optic connector with a stub fiber embedded therein. The particular example of Fig. 1 shows a reterminable connector similar to Panduit's OPTICAM® pre-polished fiber connectors. Connector 100 generally includes a ferrule holder 107 with a ferrule 108 positioned at the front end thereof, and top and bottom planks 104, 106 positioned between the ferrule 108 and a distal end 110 of the connector. The connector 100 also includes a stub fiber 101 which is typically embedded in the optical connector at the time of manufacture. The stub fiber 101 extends from the outer edge of the ferrule (which can later interface a corresponding adapter) to the inner portion of the connector in the general area of the top and bottom planks 104, 106. At least some parts of the test connector can be made from any transparent, semi-transparent, or translucent material. To splice the stub fiber 101 with a field fiber 102, a user inserts the field fiber into the connector 100 through its distal end 110, aligns both fibers accordingly, and activates a cam 105 to clamp the field fiber and the stub fiber in place, forming a stub fiber / field fiber interface 103 (also referred to as a splice joint). Ensuring that light leakage and reflection are reduced or minimized at these joints can be essential for a well-executed splice.

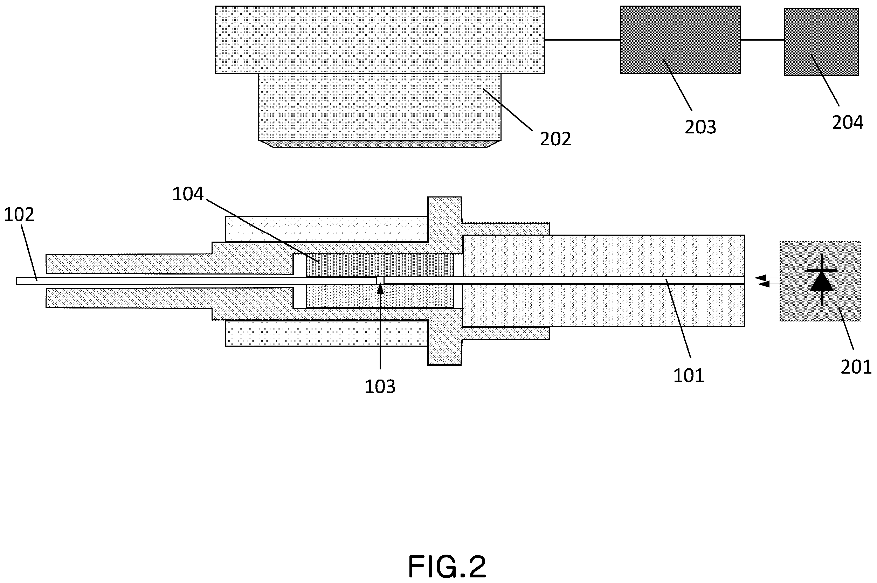

At least some embodiments of the present invention provide a means of determining and improving the quality of mechanical splices as utilized in pre-polished fiber optic connectors for terminating single-mode and multimode optical fibers in the field. One such embodiment (shown in Fig. 2) is a termination and test apparatus which comprises a light source 201, a camera 202 (e.g., a digital photo/video camera), a digital processor 203, and a pass/fail indicator and/or user interface 204.

This apparatus can aid in joining a prepared field fiber 102 to a stub fiber inside a test connector 100. To use said apparatus, the test connector 100 is positioned such that splice joint 103 is located approximately within the central field of view of the digital video camera 202. Light source 201 includes a semiconductor laser (or any other suitable optical radiation generation source) capable of emitting light having a spectral range within the optical sensitivity of the video camera, typically between about 400nm and about 1700nm. The light source is capable of launching light into the stub fiber when engaged with the test connector.

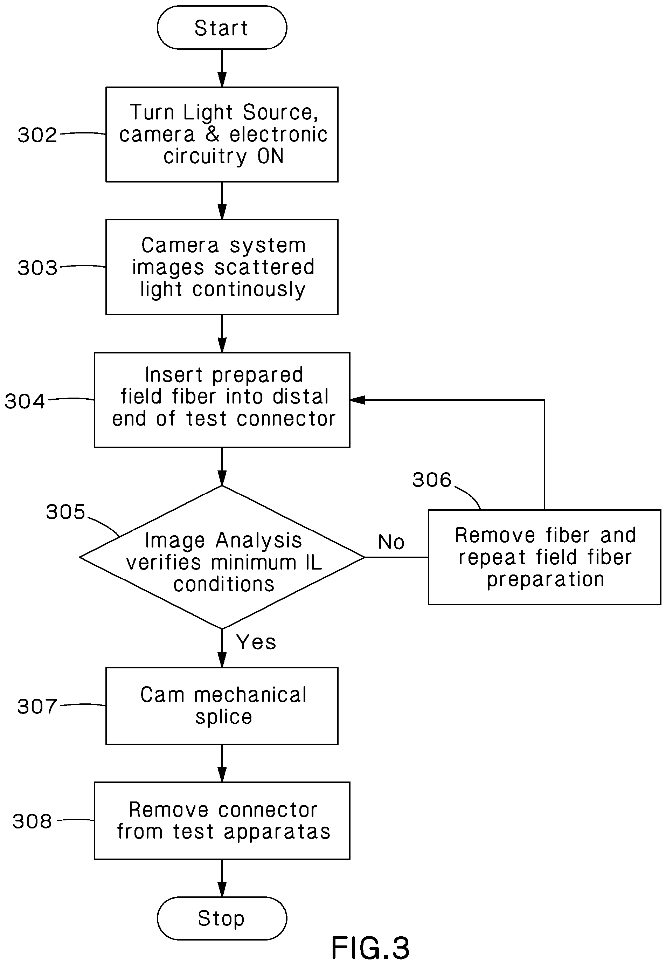

Fig. 3 illustrates a flow chart representative of a method of terminating a field fiber to a test connector and using the termination and test apparatus. When the user turns on 302 the device, power is supplied to all necessary power-consuming components such as, but not limited to, the light source 201, digital video camera 202, digital processor 203, and user visual interface 204. The spatial pattern of the scattered light emanating from splice joint 103 is imaged 303 by video camera 202, and upon insertion 304 of the field fiber 102 into the test connector 100 the termination and test apparatus analyzes 305 the images by utilizing digital signal processing algorithms. If the analysis 305 yields an unsatisfactory result (which in the case of Fig. 3 is based on a minimum amount of insertion loss [IL]), steps 304 and 305 are repeated with the field fiber 102 being removed, re-prepared, and/or repositioned 306 prior to the repetition of the steps. If the analysis 305 yields a satisfactory result, the test connector 100 is cammed 308 (or secured via any other suitable means if a non-camming connector is used) and the connectorized connector 100 is then removed 309 from the test apparatus.

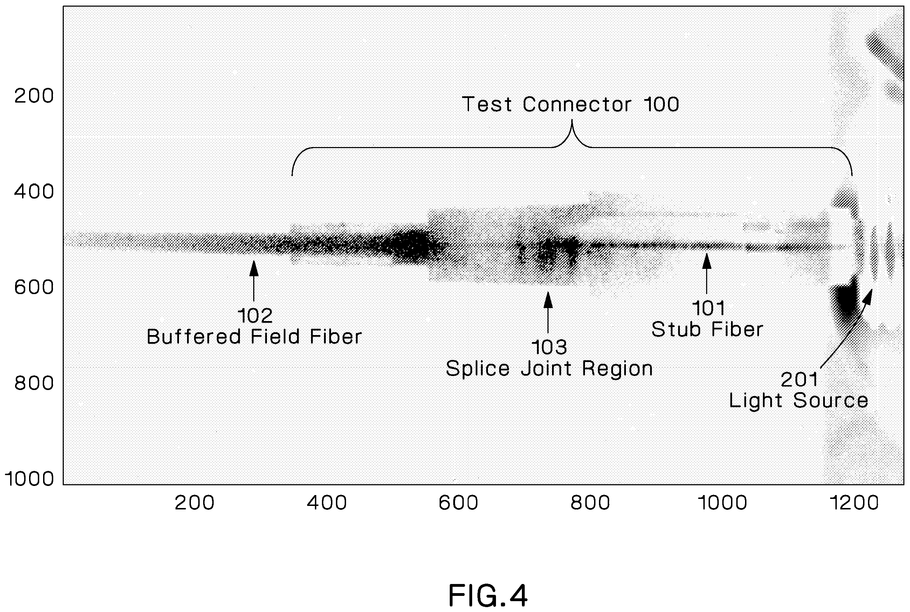

During and after the installation of the field fiber 102 into the optical fiber mechanical splice joint of the test connector 100, the apparatus continuously captures images of the scattered light pattern and analyses the digital images from at least two regions of the test connector which include, but are not limited to, splice joint 103 and the buffered field fiber 102. An example of a digital image for a partially inserted field fiber is shown in Fig. 4.

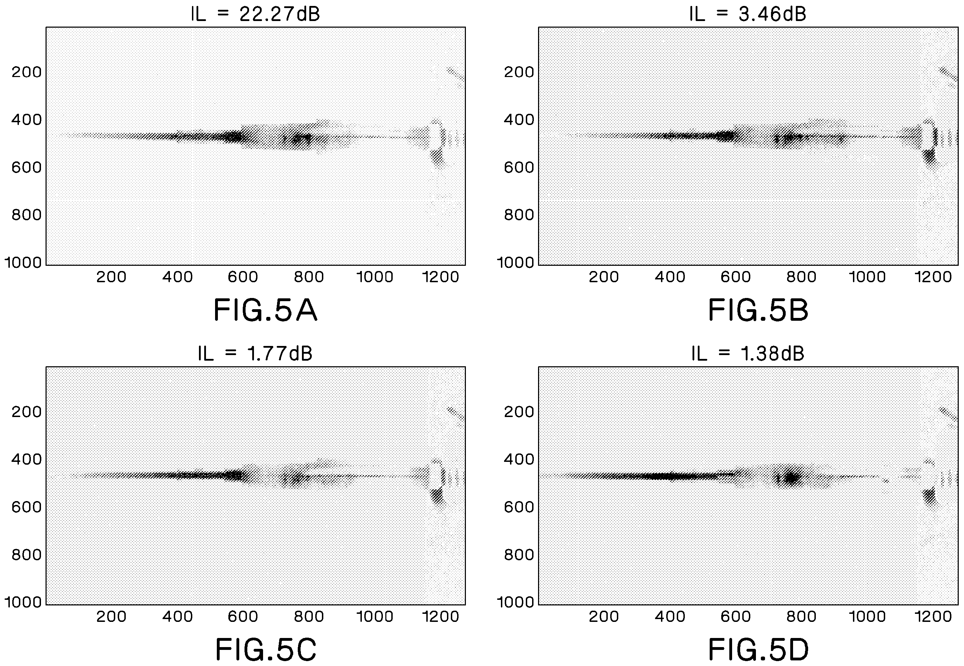

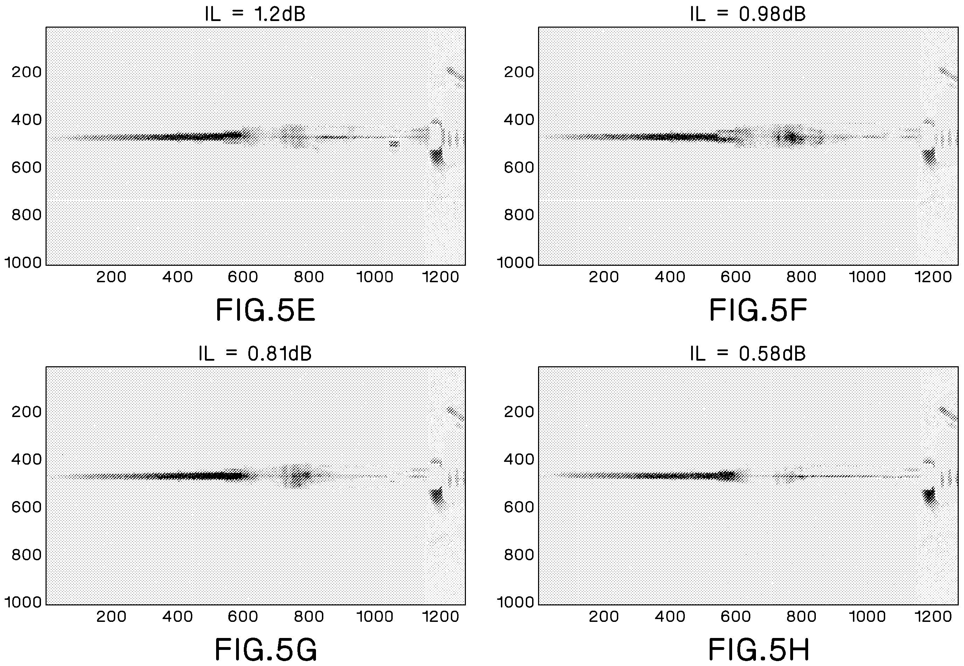

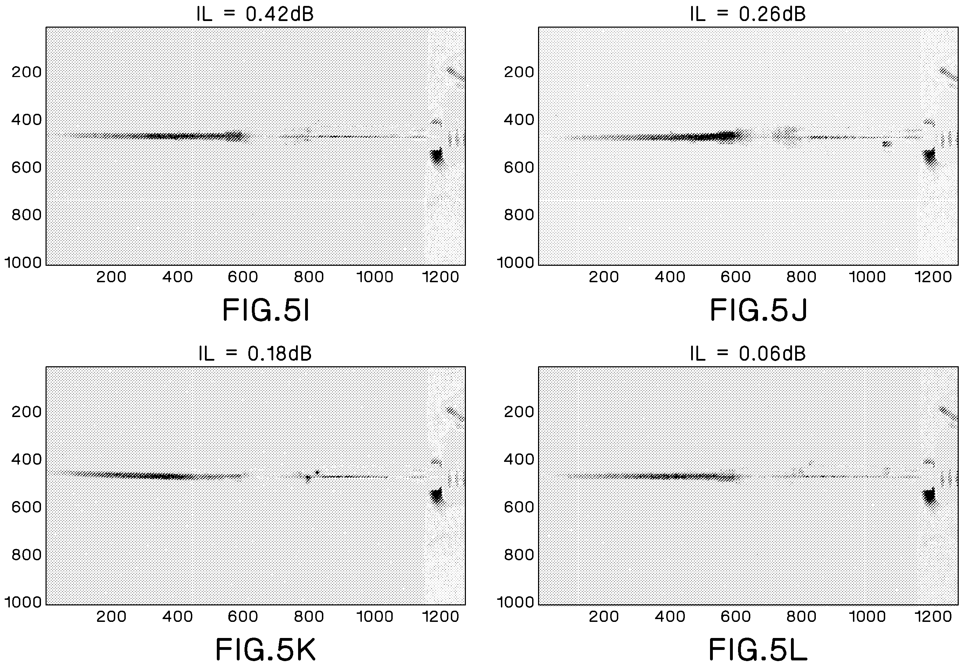

Figs. 5A - 5L show a series of negatives of digital images for an exemplary field fiber and stub fiber connector as a field fiber is installed. On the top of each image the computed insertion loss (IL) for a source wavelength of 1300nm is indicated.

It has been observed that the optical power radiated from the stub fiber connectors may not be an accurate metric to characterize the IL. Due to variations during the connectorization, the power reaching the photodetector from multiple connector regions can suffer significant fluctuations. Accordingly, at least some embodiments of the present invention rely on the geometry of the radiated light as it travels through and scatters from the connector 100 to determine quality of a splice joint.

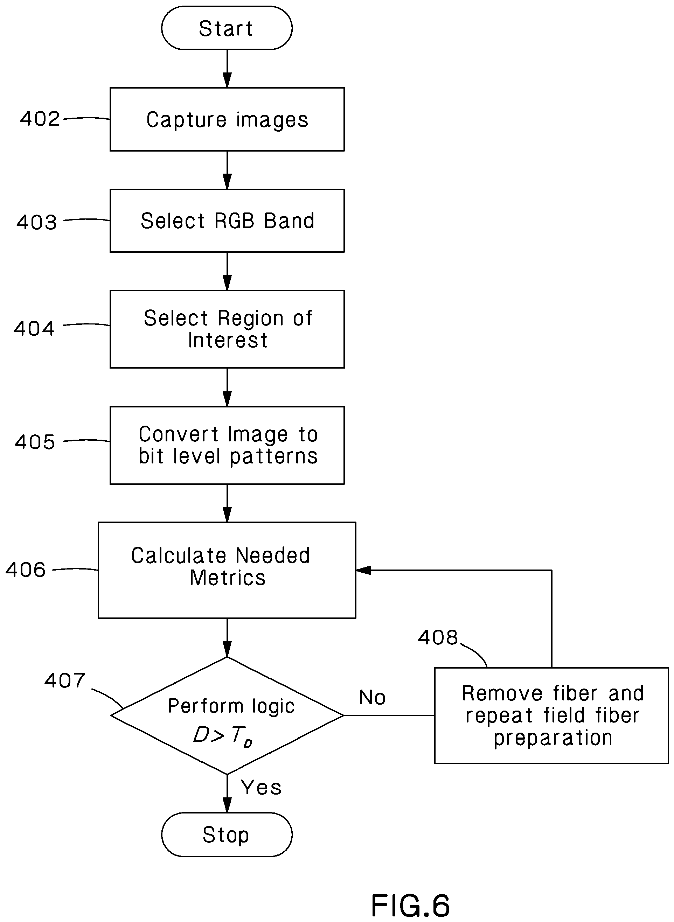

Fig. 6 illustrates a flow chart representative of one example method of analyzing the captured images of the test connector and thereby analyzing the resulting splice joint. Note that while feedback may be provided to the user in real-time, the actual analysis of a splice joint is performed on a single image captured at any one moment in time. Accordingly, images captured and analyzed seamlessly may appear as though the results of the analysis are being provided in real-time. Upon capturing 402 a digital image, the image is stored in an array *ima(x,y),* where x and y represent the horizontal and vertical coordinates of the image pixels, respectively, and the value *ima* represents the relative intensity of the light hitting the respective pixel.

If a color camera is used the intensity and color information can be obtained using a weighted sum of the three primary colors as shown in step 403. In step 404 the regions or "zones" of interest are selected. Typically, these zones of interest could include the field fiber 102, the splice joint region 103, and the stub fiber 101, and each zone can be represented by a respective range of pixels where each of those regions falls into. Next, the imaged pixels are converted 405 to bit level patterns. These patterns can have the background noise subtracted using, for example, the following equation:

$$ima_p(x,y) = \frac{ima(x,y) - \min(ima(x,y))}{\max(ima(x,y)) - \min(ima(x,y))} \qquad (1)$$

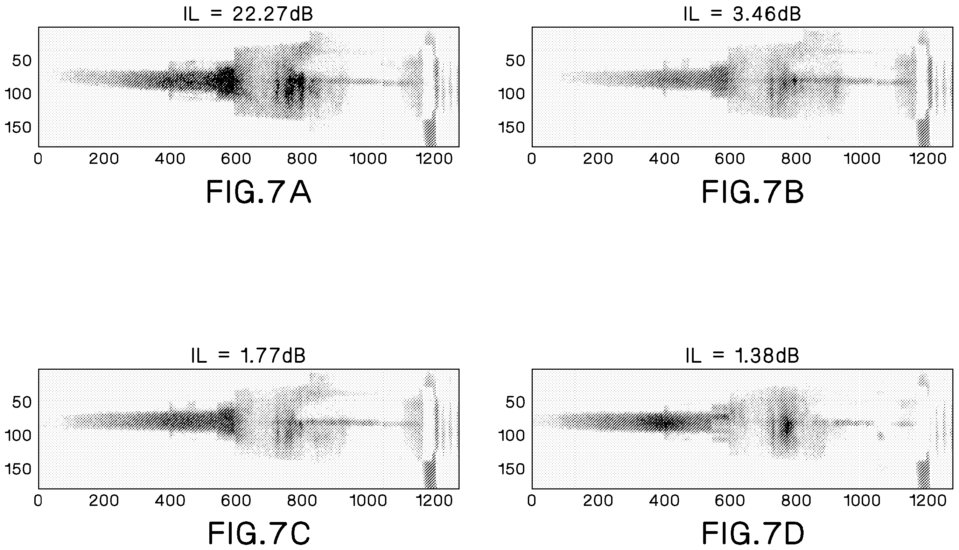

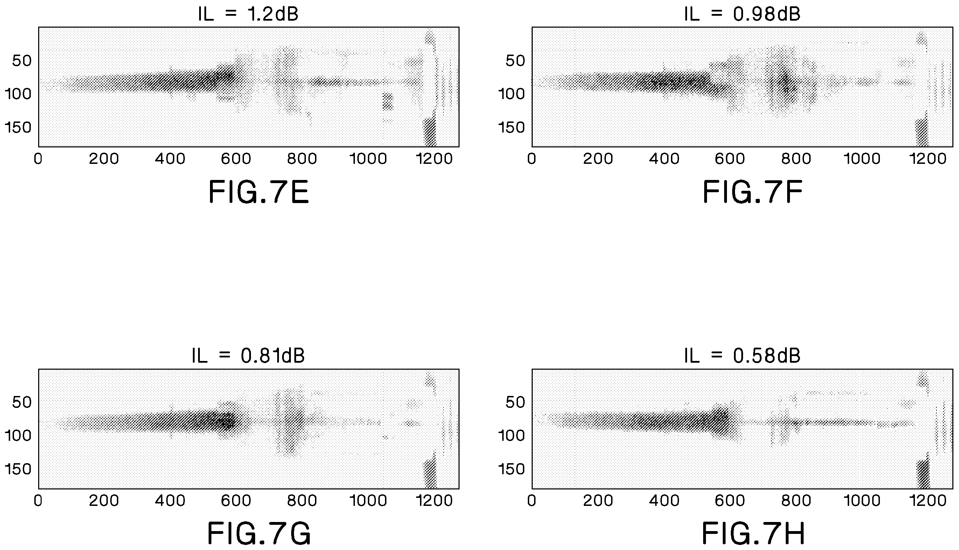

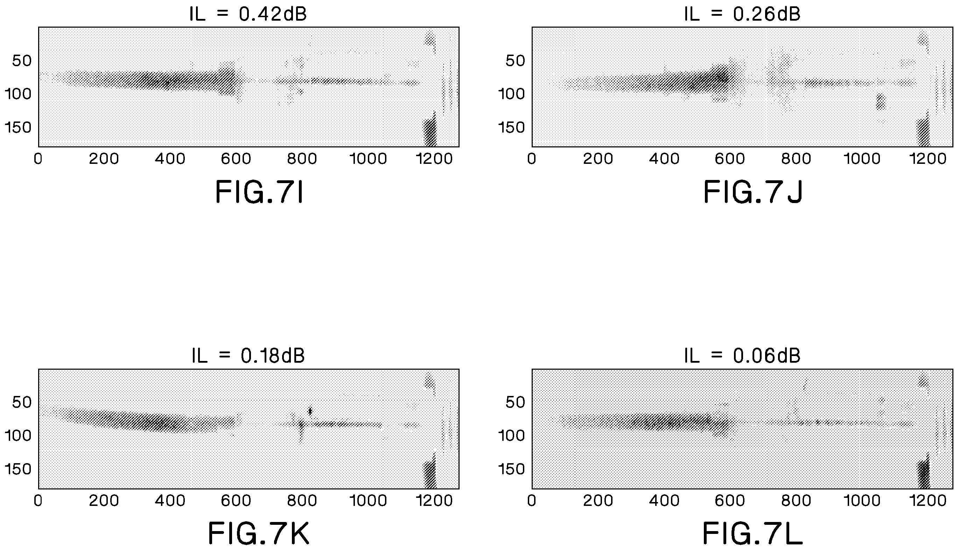

where in the presently described example min(*ima(x,y)*) is 2 and max(*ima(x,y)*) is 154. Figs. 7A - 7L show examples of images 5A - 5L, respectively, after they have been converted to bit level patterns.

Next the metric parameters and ratios of selected zones are computed 406. For example an image profile can be described by equation (2), the centroid of the image can be described by equation (3), and the uniformity around the centroid can be described by equation (4).

$$S(x) = \sum_{ypixel} ima_p(x,y) \qquad (2)$$

$$C(x) = \frac{\sum_{ypixels} x\, ima_p(x,y)}{\sum_{ypixels} ima_p(x,y)} \qquad (3)$$

$$U(x) = \sqrt{\frac{\sum_{ypixels} (x - C(x))^2\, ima_p(x,y)}{\sum_{ypixels} ima_p(x,y)}} \qquad (4)$$

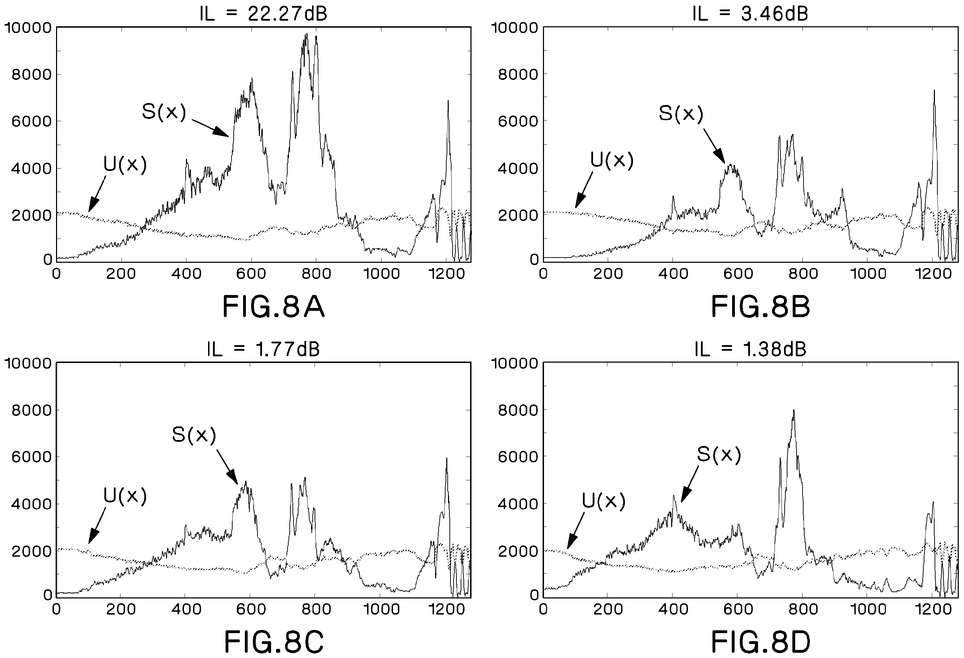

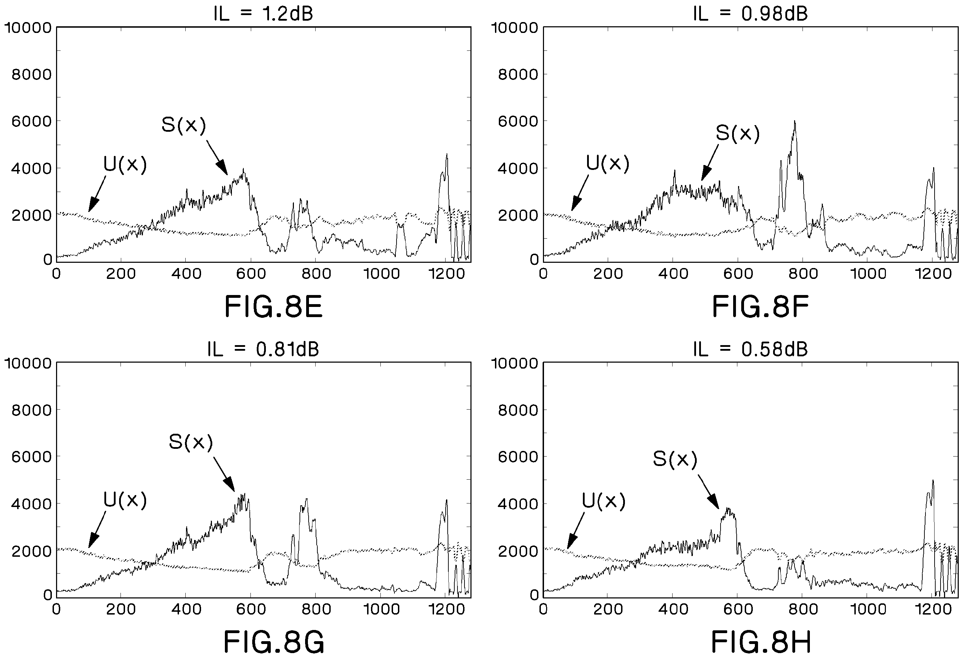

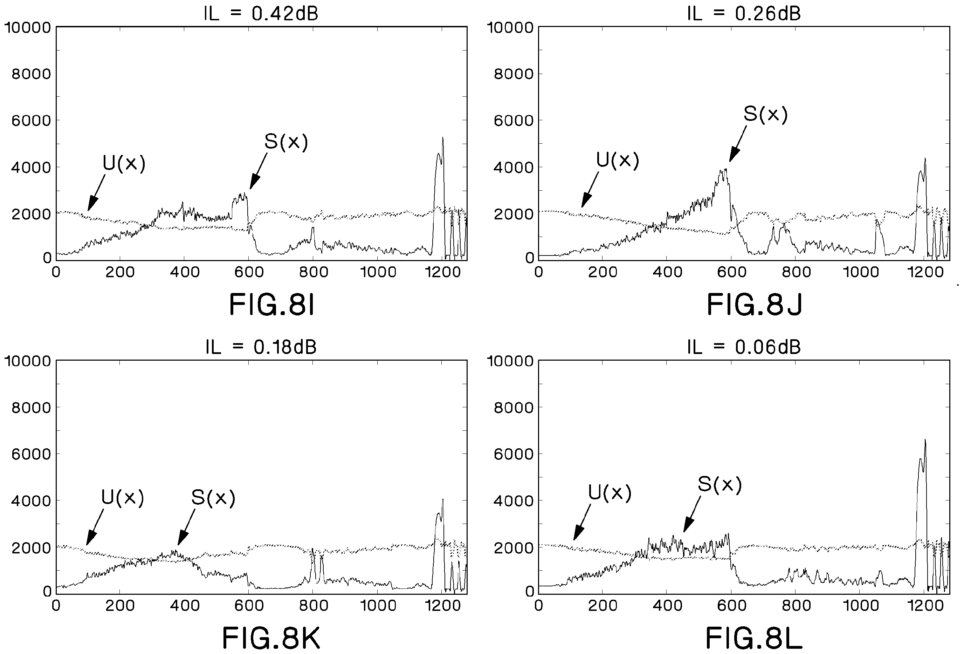

By integrating the relative optical radiation at each horizontal pixel along the connector, the image profiles give an indication of the leaking light from different locations of the connector. The centroid and uniformity (i.e., standard deviation of pixels) give an indication of how the test connector's geometry and material properties affects the leaking light. Furthermore, since various types of connectors have various types of light leakage profiles, by comparing to known profiles, the uniformity of the pixels, *U(x)*, described in equation (4) can also be utilized to identify connector types and/or improve the location of the zones of interest. Equations (2) - (4) are just examples of various parameters that can be computed to characterize the image. For the images of Figs. 7A - 7L, the parameters *S(x)* and *U(x)* are plotted in Figs. 8A - 8L, respectively, where *S(x)* is plotted as a solid line and *U(x)* is plotted as a dotted line.

To determine the quality of the splice, one can compare specific zones of the test connector (for example as defined in Fig. 4), where the field fiber 102, the splice joint region 103, and the stub fiber 101 correspond to the pixels 200±150, 580±190, and 750±50, respectively, in the images of Figs. 7A - 7L. Note that the pixels referenced in this case are those along the horizontal axis as that is the axis along which the light source is launching light into the stub fiber. The comparison of these zones can be done using ratios which are relative metrics which, in the currently described example, are computed using *S(x)* and/or *U(x)* values. The range of pixels which define the various zones are specific to the image setup parameters such as focal length of the lens, working distance from the camera, and shape of the connector. Since all this information is generally known at priori, the method described herein can be calibrated to operate efficiently.

Figs. 8A - 8L illustrate plots of computed *S(x)* and *U(x)* values for test connectors imaged in Figs. 7A - 7L respectively. It can be observed therefrom that *S(x)* profiles change significantly as a function of the insertion loss. For this example, one may assume that the maximum insertion loss (IL$_{max}$) specified for the test connector is 0.5 dB. To

determine whether $IL \leq IL_{max}$, one may use two ratios $R_1$ and $R_2$ defined in equations (5) and (6), respectively, to compare image zones 101, 102, and 103, and $U_m$ defined in equation (7), which is the mean value of $U(x)$ in zone 103:

$$R_1 = \frac{\sum\limits_{[\text{Re}gion\_103]} S(x)}{\sum\limits_{[\text{Re}gion\_102]} S(x)} \tag{5}$$

$$R_2 = \frac{\sum\limits_{[\text{Re}gion\_103]} S(x)}{\sum\limits_{\text{Re}gion\_101} S(x)} \tag{6}$$

$$U_m = K \; mean_{\text{Re}gion\_103}(U(x)) \tag{7}$$

where $K$ is an optional arbitrary constant, with value of 40 in this example for normalization purposes.

The selection of the metrics can depend on the connector type and imaging setup. For the connector and setup utilized in the currently described example, ratio $R_1$ compares the splice joint region 103 to the field fiber region 102, and ratio $R_2$ compares the splice joint region 103 to stub fiber region 101.

The metric values are evaluated against predetermined limits. These limits may be selected such that any particular metric falling within the established limit is deemed to signify an acceptably high probability that the insertion loss for a particular connector is less than or equal to a preferred level. Performance data which may be helpful in determining an accurate limit may be obtained by way of statistical analysis of various test connector configurations.

Since the degree of probability may be user-dependent, the predetermined limits may vary causing the system to be more or less stringent. In the presently described example, metrics $R_1$, $R_2$, and $U_m$ are evaluated against limits L1, L2, and L3, respectively. Accordingly, L1, L2, and L3 have been selected such that any respective $R_1$, $R_2$, and $U_m$ values which fall within those limits will indicate a sufficiently high probability that the insertion loss for the test connector is $\leq 0.5dB$. Note that inclusion within a limit depends not only on whether a metric value is above or below some limit value, but also on whether the particular limit is an upper or a lower limit. This will vary for different metrics. In the currently described example, $R_1$ and $R_2$ are upper limits and $U_m$ is a lower limit. Thus, $R_1 <$ L1, $R_2 <$ L2, and $U_m >$ L3 satisfy these limits.

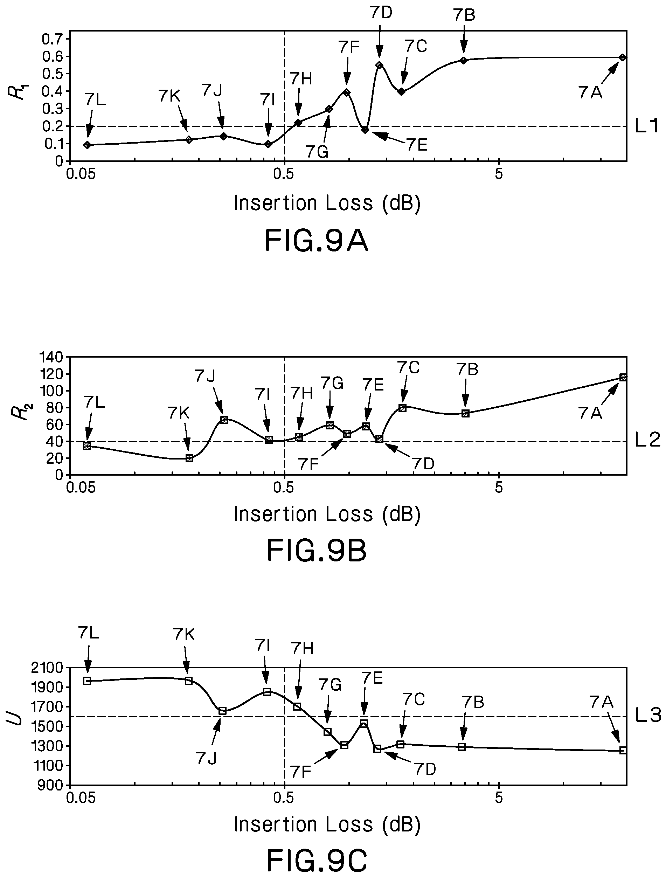

The values of $R_1$, $R_2$, and $U_m$, (along with their respective predetermined limits L1, L2, and L3) for the connectors tested in Figs. 7A - 7L are shown in Figs. 9A - 9C. From these figures it can be seen that since each metric exhibits significant variation throughout a broad range of test connector scenarios, the use of only one metric may be insufficient for formulating a decision based on some acceptable level of certainty. For example, in Fig. 9A, the $R_1$ value for the connector of Fig. 7E falls slightly below the upper limit set by L1, signifying an acceptable termination if relying solely on the $R_1$ metric. However, this would be a false positive as the actual insertion loss for this connector is 1.2dB. To reduce the chance of a potential false-positive or a false-negative, it is advantageous to evaluate a connector based on at least two of its metrics. For example, in the presently described example, any one value of $R_1$ (shown in Fig. 9A) may be evaluated in conjunction with, for example, a corresponding value of $R_2$ (shown in Fig. 9B) and/or a corresponding value of $U_m$ (shown in Fig. 9C). Continuing with the example of the connector of Fig. 7E, it can be seen in either of Figs. 9B or 9C, that the $R_2$ and the $U_m$ values for said connector fall outside of the allowed limits of L2 and L3, respectively. Accordingly, taking more than one metric into consideration may improve the accuracy of the final result of the test apparatus.

Referring back to Fig. 6, upon determining 406 the necessary metrics, assessments of those metrics are performed 407. This can be done by logically evaluating whether any metric is within the predetermined limit, summing those logical values together, and then evaluating the sum against a predetermined threshold. To further improve the evaluation method, a set of weights, $W_i$, may be defined for each logical metric evaluation in order to rank their importance.

In the presently described example, all three metrics, $R_1$, $R_2$, and $U_m$, are evaluated by way of the following equation:

$$D = W_1(R_1 < L1) + W_2(R_2 < L2) + W_3(U_m > L3) \tag{8}$$

Note that equation (8) is merely exemplary and other equations may be derived and used if so desired. If $R_1$ is within the limit of L1 (i.e., less than L1) then the evaluation of $R_1$ against L1 is set to a value 1; otherwise it is set to 0. This result is then multiplied by the weight $W_1$. If $R_2$ is within the limit of L2 (i.e., less than L2) then the evaluation of $R_2$ against L2 is set to a value 1; otherwise it is set to 0. This result is then multiplied by the weight $W_2$. If $R_3$ is within the limit of L3 (i.e., greater than L3) then the evaluation of $R_3$ against L3 is set to a value 1; otherwise it is set to 0. This result is then multiplied by the weight $W_3$. The summation of weighted metric evaluations is then compared against a predetermined threshold, $T_D$, which is proportional to the probability of producing a correct final decision. If $D > T_D$, the probability that $IL < IL_{max}$ is sufficiently high and therefore the splice joint is acceptable. Otherwise a failure indicator 204 can be activated, and the fiber is reterminated 408 and the splice is thereafter reevaluated 406, 407.

By way of an example, two test connectors shown in Figs. 7J and 7H can be evaluated based on the metrics shown in Figs. 9A - 9C and the weights being set to $W_1 = 60$, $W_2 = 20$, $W_3 = 30$. For the connector of Fig. 7J, $R_1 = 0.143$, $R_2 = 65.527$, and $U_m = 1653.574$. Plugging these values into equation (8) and evaluating against the data shown in Figs. 9A - 9C results in:

$$D = 60(0.143 < L1) + 20(65.527 < L2) + 30(1653.574 > L3) \qquad (9)$$

$$D = 60(1) + 20(0) + 30(1) \qquad (10)$$

$$D = 90 \qquad (11)$$

Thereafter, $D$ is compared against the threshold $T_D$ (which for the purposes of this example is assumed to be 80). Since (90 > 80) is true, the probability that IL is less than the maximum allowed IL is adequately high and therefore the splice joint is acceptable. Note that sole reliance on the $R_2$ metric would have eliminated this termination as acceptable even though the actual IL value is 0.26.

For connector of Fig. 7H, $R_1 = 0.22$, $R_2 = 45.078$, and $U_m = 1703.023$. Plugging these values into equation (8) and evaluating against the data shown in Figs. 9A - 9C results in:

$$D = 60(0.22 < L1) + 20(45.078 < L2) + 30(1703.023 > L3) \qquad (12)$$

$$D = 60(0) + 20(0) + 30(1) \qquad (13)$$

$$D = 30 \qquad (14)$$

Thereafter, $D$ is compared against the threshold $T_D$. Since (30 > 80) is false, the probability that IL is less than the maximum allowed IL is insufficiently low and therefore the splice joint is unacceptable. Note that sole reliance on the $U_m$ metric would have deemed this termination acceptable even though the actual IL value is 0.58.

It should be noted that the aforementioned method can operate with one or more video cameras or additional imaging systems such as mirrors to capture images from opposite views of the connector splice joint. However, in some embodiments it may be preferable to use connectors with light-diffusing material. Therefore, one camera may be enough to provide an accurate estimation of the insertion loss based on the captured images.

A convenient and potentially cost effective embodiment of the present invention is to use a smartphone or other wireless device to control and view test results of the disclosed apparatus. The use of a personal handheld device may reduce the cost and size of the test apparatus by allowing at least a part of the application/use interface portion to run on the handheld device via an application which may be downloaded from an internet website. Furthermore, the handheld device may communicate with the test apparatus by means of Bluetooth, Wi-Fi, or other suitable wireless communication protocol.

In an embodiment, the makeup of the test apparatus can include a smartphone and an adapter. This can allow one to take advantage the hardware typically installed in the smartphone, using the smartphone's digital camera and digital processor for the digital camera and digital processor, respectively, of the test apparatus. In addition, an adapter having a light source therein can be connected to the phone. Such adapter may draw power directly from the smartphone and be activated by a test application executed on the smartphone. Such configuration may provide significant cost savings over a dedicated test apparatus and may be more desirable in some cases.

Note that while this invention has been described in terms of one or more embodiments, these embodiments are non-limiting (regardless of whether they have been labeled as exemplary or not), and there are alterations, permutations, and equivalents, which fall within the scope of this invention. For example, any number of zones of interest may be used for the evaluations of the splice joints and those zones may be defined in any way suitable for a particular application. Likewise, any number of metrics may be used to evaluate the properties of the splice, and those metrics may be defined by any suitable equation and/or relationship. Thus, while the described embodiments have presented a particular example of what is defined as any specific zone and any specific metric, those zones and metrics should not to be construed as limiting in any way. Additionally, the described embodiments should not be interpreted as mutually exclusive, and should instead be understood as potentially combinable if such combinations are permissive. It should also be noted that there are many alternative ways of implementing the described methods and apparatuses. It is therefore intended that the scope of protection includes all such alterations, permutations, and equivalents falling within the definition of the appended claims.

Furthermore, the subject matter described herein, such as for example the methods for testing the integrity of a splice joint in accordance with the present invention, can be implemented partially in software in combination with hardware and/or firmware. For example, the subject matter described herein can be partially implemented in software executed by a processor. In one exemplary implementation, the subject matter described herein can be implemented using a non-transitory computer readable medium having stored thereon computer executable instructions that when executed by the processor of a computer control the computer to perform steps of a method or process. Exemplary computer readable media suitable for implementing the subject matter described herein include non-transitory computer-readable media, such as disk memory devices, chip memory devices, programmable logic devices, and application specific integrated circuits. In addition, a computer readable medium that implements the subject matter described herein may be located on a single device or computing platform or may be distributed across multiple devices or computing platforms. Devices embodying the subject matter described herein may be manufactured by any means, such as by semiconductor fabrication or discreet component assembly although other types of manufacturer are also acceptable, and can be manufactured of any material, e.g., CMOS.

**Claims**

1. An apparatus for installing a field fiber (102) in a fiber optic connector (100) having a stub fiber (101) therein and evaluating at least one characteristic of a splice (103) between said stub fiber and said field fiber, at least a portion of said fiber optic connector being at least one of transparent or translucent, said apparatus comprising:

   a light source (201) for injecting a light into said fiber optic connector via said stub fiber, some of said injected light radiating through said fiber optic connector;
   a digital camera (202), said digital camera capturing a digital image of said fiber optic connector; and
   a digital processor (203), said digital processor using said digital image to evaluate light radiating through said fiber optic connector to determine said at least one characteristic of said splice,
   **characterized in that**:
   said digital processor further evaluates a spatial pattern of said light radiating through said fiber optic connector, and wherein said digital processor further evaluates said spatial pattern of said light radiating through said fiber optic connector from at least two zones of said fiber optic connector, wherein said at least two zones include at least two of a stub fiber zone, a splice zone, and a field fiber zone.

2. The apparatus of claim 1, wherein said digital camera (202) is at least one of a digital photo camera and a digital video camera.

3. The apparatus of claim 1, wherein said apparatus:

   stores a relative intensity of at least some pixels of said digital image in a file;
   selects at least two zones of said fiber optic connector (100) for evaluation, each of said zones being defined by a range of pixels;
   converts each of said at least some pixels to bit level patterns to obtain a bit level image;
   determines a metric for each of said at least two zones; and
   uses at least one ratio of said respective metrics to render a decision on whether an insertion loss of said fiber optic connector exceeds a maximum allowed insertion loss.

**4.** The apparatus of claim 3, wherein said decision on whether said insertion loss of said fiber optic connector (100) exceeds said maximum allowed insertion loss is based on a statistical probability.

**5.** The apparatus of claim 1, further comprising:

a smartphone, said smartphone housing said digital camera (202) and said digital processor (203); and
a smartphone adapter connected to said smartphone, said smartphone adapter housing said light source (201).

**6.** The apparatus of claim 1, wherein said digital image further includes at least one of said field fiber (102) extending beyond said fiber optic connector (100) and an adapter that couples said light source (201) to said fiber optic connector, and wherein said digital processor (203) further uses at least one of light radiating from said field fiber extending beyond said fiber optic connector and light radiating from said adapter that couples said light source to said fiber optic connector to determine said at least one characteristic of said splice (103).

**7.** A method of installing a field fiber (102) in a fiber optic connector (100) having a stub fiber (101) therein and evaluating at least one characteristic of a splice (103) between said stub fiber and said field fiber, at least a portion of said fiber optic connector being at least one of transparent or translucent, said method comprising the steps of:

mating said fiber optic connector with a test apparatus;
injecting a light from a light source (201) into said fiber optic connector via said stub fiber, some of said injected light radiating through said fiber optic connector; and
using a digital camera (202) to evaluate light radiating through said fiber optic connector to determine said at least one characteristic of said splice, **characterized in that**:
said step of using said digital camera includes evaluating a spatial pattern of said light radiating through said fiber optic connector, and wherein said step of evaluating said spatial pattern includes analyzing light radiating through at least two zones of said fiber optic connector, wherein said at least two zones include at least two of a stub fiber zone, a splice zone, and a field fiber zone.

**8.** The method of claim 7, wherein said digital camera (202) is at least one of a digital photo camera and a digital video camera.

**9.** The method of claim 7, further comprising the step of securing said field fiber (102) within said fiber optic connector (100) when an integrity of said splice (103) is determined to be acceptable.

**10.** The method of claim 7, wherein said step of using said digital camera (202) to determine said at least one characteristic of said splice (103) includes the sub-steps of:

capturing a digital image of said fiber optic connector (100);
storing a relative intensity of at least some pixels of said digital image in a file;
selecting at least two zones of said fiber optic connector for evaluation, each of said zones being defined by a range of pixels;
converting each of said at least some pixels to bit level patterns to obtain a bit level image;
determining a metric for each of said at least two zones; and
using at least one ratio of said respective metrics to render a decision on whether an insertion loss of said fiber optic connector exceeds a maximum allowed insertion loss.

**11.** The method of claim 10, wherein said decision on whether said insertion loss of said fiber optic connector (100) exceeds said maximum allowed insertion loss is based on a statistical probability.

**12.** The method of claim 7, wherein said step of using said digital camera (202) to determine said at least one characteristic of said splice (103) further includes evaluating at least one of light radiating from said field fiber (102) extending beyond said fiber optic connector (100) and light radiating from an adapter that couples said light source (201) to said fiber optic connector.

**Patentansprüche**

**1.** Vorrichtung zum Installieren einer Feldfaser (102) in einem faseroptischen Verbinder (100) mit einer Stummelfaser (101) darin und zum Auswerten mindestens einer Eigenschaft eines Spleißes (103) zwischen der Stummelfaser und der Feldfaser, wobei mindestens ein Teil des faseroptischen Verbinders mindestens entweder transparent oder durchscheinend ist, wobei die Vorrichtung umfasst:

eine Lichtquelle (201) zum Einspeisen eines Lichts in den faseroptischen Verbinder über die Stummelfaser, wobei ein Teil des eingespeisten Lichts durch den faseroptischen Verbinder strahlt;
eine Digitalkamera (202), wobei die Digitalkamera ein digitales Bild des faseroptischen Verbinders aufnimmt; und
einen digitalen Prozessor (203), wobei der digitale Prozessor das digitale Bild verwendet, um Licht auszuwerten, das durch den faseroptischen Verbinder strahlt, um die mindestens eine Eigenschaft des Spleißes zu bestimmen, **dadurch gekennzeichnet, dass**:
der digitale Prozessor ferner ein räumliches Muster des Lichts auswertet, das durch den faseroptischen Verbinder strahlt, und wobei der digitale Prozessor ferner das räumliche Muster des Lichts auswertet, das durch den faseroptischen Verbinder von mindestens zwei Zonen des faseroptischen Verbinders strahlt, wobei die mindestens zwei Zonen mindestens zwei von einer Stummelfaserzone, einer Spleißzone und einer Feldfaserzone beinhalten.

2. Vorrichtung nach Anspruch 1, wobei die Digitalkamera (202) eine digitale Fotokamera und/oder eine digitale Videokamera ist.

3. Vorrichtung nach Anspruch 1, wobei die Vorrichtung:

eine relative Intensität von mindestens einigen Pixeln des digitalen Bildes in einer Datei speichert;
mindestens zwei Zonen des faseroptischen Verbinders (100) zur Auswertung auswählt, wobei jede der Zonen durch einen Bereich von Pixeln definiert ist;
jedes der mindestens einigen Pixel in Bitpegelmuster umwandelt, um ein Bitpegelbild zu erhalten;
eine Metrik für jede der mindestens zwei Zonen bestimmt; und
mindestens ein Verhältnis der jeweiligen Metriken verwendet, um eine Entscheidung darüber zu treffen, ob ein Einfügeverlust des faseroptischen Verbinders einen maximal zulässigen Einfügeverlust überschreitet.

4. Vorrichtung nach Anspruch 3, wobei die Entscheidung, ob der Einfügeverlust des faseroptischen Verbinders (100) den maximal zulässigen Einfügeverlust überschreitet, auf einer statistischen Wahrscheinlichkeit basiert.

5. Vorrichtung nach Anspruch 1, ferner umfassend:
ein Smartphone, wobei das Smartphone die Digitalkamera (202) und den digitalen Prozessor (203) aufnimmt; und
einen Smartphone-Adapter, der mit dem Smartphone verbunden ist, wobei der Smartphone-Adapter die Lichtquelle (201) aufnimmt.

6. Vorrichtung nach Anspruch 1, wobei das digitale Bild ferner die Feldfaser (102), die sich über den faseroptischen Verbinder (100) hinaus erstreckt, und/oder einen Adapter beinhaltet, der die Lichtquelle (201) mit dem faseroptischen Verbinder koppelt, und wobei der digitale Prozessor (203) ferner Licht, das von der Feldfaser, die sich über den faseroptischen Verbinder hinaus erstreckt, gestrahlt wird, und/oder Licht, das von dem Adapter gestrahlt wird, der die Lichtquelle mit dem faseroptischen Verbinder koppelt, verwendet, um die mindestens eine Eigenschaft des Spleißes (103) zu bestimmen.

7. Verfahren zum Installieren einer Feldfaser (102) in einem faseroptischen Verbinder (100) mit einer Stummelfaser (101) darin und zum Auswerten mindestens einer Eigenschaft eines Spleißes (103) zwischen der Stummelfaser und der Feldfaser, wobei mindestens ein Teil des faseroptischen Verbinders mindestens entweder transparent oder durchscheinend ist, wobei das Verfahren die folgenden Schritte umfasst:

Zusammenfügen des faseroptischen Verbinders mit einer Testvorrichtung;
Einspeisen eines Lichts von einer Lichtquelle (201) in den faseroptischen Verbinder über die Stummelfaser, wobei ein Teil des eingespeisten Lichts durch den faseroptischen Verbinder strahlt; und
Verwenden einer Digitalkamera (202) zum Auswerten von Licht, das durch den faseroptischen Verbinder strahlt, um die mindestens eine Eigenschaft des Spleißes zu bestimmen, **dadurch gekennzeichnet, dass**:
der Schritt des Verwendens der Digitalkamera das Auswerten eines räumlichen Musters des durch den faseroptischen Verbinder strahlenden Lichts beinhaltet, und wobei der Schritt des Auswertens des räumlichen Musters das Analysieren von Licht beinhaltet, das durch mindestens zwei Zonen des faseroptischen Verbinders strahlt, wobei die mindestens zwei Zonen mindestens zwei von einer Stummelfaserzone, einer Spleißzone und einer Feldfaserzone beinhalten.

**8.** Verfahren nach Anspruch 7, wobei die Digitalkamera (202) eine digitale Fotokamera und/oder eine digitale Videokamera ist.

**9.** Verfahren nach Anspruch 7, das ferner den Schritt umfasst, die Feldfaser (102) innerhalb des faseroptischen Verbinders (100) zu sichern, wenn eine Integrität des Spleißes (103) als akzeptabel bestimmt wird.

**10.** Verfahren nach Anspruch 7, wobei der Schritt des Verwendens der Digitalkamera (202) zum Bestimmen der mindestens einen Eigenschaft des Spleißes (103) die folgenden Unterschritte beinhaltet:

Erfassen eines digitalen Bildes des faseroptischen Verbinders (100);
Speichern einer relativen Intensität von mindestens einigen Pixeln des digitalen Bildes in einer Datei;
Auswählen von mindestens zwei Zonen des faseroptischen Verbinders zur Auswertung, wobei jede der Zonen durch einen Bereich von Pixeln definiert ist;
Umwandeln der mindestens einigen Pixel in Bitpegelmuster, um ein Bitpegelbild zu erhalten; Bestimmen einer Metrik für jede der mindestens zwei Zonen; und
Verwenden mindestens eines Verhältnisses der jeweiligen Metriken, um eine Entscheidung darüber zu treffen, ob ein Einfügeverlust des faseroptischen Verbinders einen maximal zulässigen Einfügeverlust überschreitet.

**11.** Verfahren nach Anspruch 10, wobei die Entscheidung, ob der Einfügeverlust des faseroptischen Verbinders (100) den maximal zulässigen Einfügeverlust überschreitet, auf einer statistischen Wahrscheinlichkeit basiert.

**12.** Verfahren nach Anspruch 7, wobei der Schritt des Verwendens der Digitalkamera (202) zum Bestimmen der mindestens einen Eigenschaft des Spleißes (103) ferner das Auswerten von Licht, das von der Feldfaser (102), die sich über den faseroptischen Verbinder (100) hinaus erstreckt, gestrahlt wird, und/oder von Licht, das von einem Adapter gestrahlt wird, der die Lichtquelle (201) mit dem faseroptischen Verbinder koppelt, beinhaltet.

## Revendications

**1.** Appareil destiné à installer une fibre de terrain (102) dans un connecteur de fibre optique (100) renfermant un bout de fibre (101) et évaluer au moins une caractéristique d'une épissure (103) entre ledit bout de fibre et ladite fibre de terrain, au moins une partie dudit connecteur de fibre optique étant transparente et/ou translucide, ledit appareil comprenant :

une source de lumière (201) pour injecter une lumière à l'intérieur dudit connecteur de fibre optique par le biais dudit bout de fibre, une partie de ladite lumière injectée rayonnant à travers ledit connecteur de fibre optique ;
une caméra numérique (202), ladite caméra numérique capturant une image numérique dudit connecteur de fibre optique ; et
un processeur numérique (203), ledit processeur numérique utilisant ladite image numérique pour évaluer la lumière rayonnant à travers ledit connecteur de fibre optique pour déterminer ladite au moins une caractéristique de ladite épissure, **caractérisé en ce que** :
ledit processeur numérique évalue en outre un motif spatial de ladite lumière rayonnant à travers ledit connecteur de fibre optique, et dans lequel ledit processeur numérique évalue en outre ledit motif spatial de ladite lumière rayonnant à travers ledit connecteur de fibre optique depuis au moins deux zones dudit connecteur de fibre optique, lesdites au moins deux zones incluant au moins deux zones parmi une zone de bout de fibre, une zone d'épissure, et une zone de fibre de terrain.

**2.** Appareil de la revendication 1, dans lequel ladite caméra numérique (202) est un appareil photo numérique et/ou une caméra vidéo numérique.

**3.** Appareil de la revendication 1, ledit appareil :

stockant une intensité relative d'au moins certains pixels de ladite image numérique dans un fichier ;
sélectionnant au moins deux zones dudit connecteur de fibre optique (100) pour évaluation, chacune desdites zones étant définie par une gamme de pixels ;
convertissant chacun desdits au moins certains pixels en motifs de niveaux de bits pour obtenir une image en niveaux de bits ;
déterminant une métrique pour chacune desdites au moins deux zones ; et
utilisant au moins un rapport de ladite métrique respective pour rendre une décision quant à ce qu'une perte d'insertion dudit connecteur de fibre optique dépasse ou non une perte d'insertion maximale autorisée.

4. Appareil de la revendication 3, dans lequel ladite décision quant à ce que ladite perte d'insertion dudit connecteur de fibre optique (100) dépasse ou non ladite perte d'insertion maximale autorisée est basée sur une probabilité statistique.

5. Appareil de la revendication 1, comprenant en outre :

un mobile multifonction, ledit mobile multifonction abritant ladite caméra numérique (202) et ledit processeur numérique (203) ; et
un adaptateur de mobile multifonction connecté audit mobile multifonction, ledit adaptateur de mobile multifonction abritant ladite source de lumière (201).

6. Appareil de la revendication 1, dans lequel ladite image numérique comporte en outre ladite fibre de champ (102) s'étendant au-delà dudit connecteur de fibre optique (100) et/ou un adaptateur qui couple ladite source de lumière (201) audit connecteur de fibre optique, et dans lequel ledit processeur numérique (203) utilise en outre la lumière rayonnant depuis ladite fibre de champ s'étendant au-delà dudit connecteur de fibre optique et/ou la lumière rayonnant depuis ledit adaptateur qui couple ladite source de lumière audit connecteur de fibre optique pour déterminer ladite au moins une caractéristique de ladite épissure (103).

7. Procédé d'installation d'une fibre de terrain (102) dans un connecteur de fibre optique (100) renfermant un bout de fibre (101) et d'évaluation d'au moins une caractéristique d'une épissure (103) entre ledit bout de fibre et ladite fibre de terrain, au moins une partie dudit connecteur de fibre optique étant transparente et/ou translucide, ledit procédé comprenant les étapes de :

couplage dudit connecteur de fibre optique à un appareil de test ;
injection d'une lumière depuis une source de lumière (201) à l'intérieur dudit connecteur de fibre optique par le biais dudit bout de fibre, une partie de ladite lumière injectée rayonnant à travers ledit connecteur de fibre optique ; et
utilisation d'une caméra numérique (202) pour évaluer la lumière rayonnant à travers ledit connecteur de fibre optique pour déterminer ladite au moins une caractéristique de ladite épissure, **caractérisé en ce que** :
ladite étape d'utilisation de ladite caméra numérique comporte l'évaluation d'un motif spatial de ladite lumière rayonnant à travers ledit connecteur de fibre optique, et dans lequel ladite étape d'évaluation dudit motif spatial comporte l'analyse de la lumière rayonnant à travers au moins deux zones dudit connecteur de fibre optique, lesdites au moins deux zones incluant au moins deux zones parmi une zone de bout de fibre, une zone d'épissure, et une zone de fibre de terrain.

8. Procédé de la revendication 7, dans lequel ladite caméra numérique (202) est un appareil photo numérique ou une caméra vidéo numérique.

9. Procédé de la revendication 7, comprenant en outre l'étape de fixation de ladite fibre de champ (102) à l'intérieur dudit connecteur de fibre optique (100) quand une intégrité de ladite épissure (103) est déterminée comme étant acceptable.

10. Procédé de la revendication 7, dans lequel ladite étape d'utilisation de ladite caméra numérique (202) pour déterminer ladite au moins une caractéristique de ladite épissure (103) comporte les sous-étapes de :

capture d'une image numérique dudit connecteur de fibre optique (100) ;
stockage d'une intensité relative d'au moins certains pixels de ladite image numérique dans un fichier ;
sélection d'au moins deux zones dudit connecteur de fibre optique pour évaluation, chacune desdites zones étant définie par une gamme de pixels ;
conversion de chacun desdits au moins certains pixels en motifs de niveaux de bits pour obtenir une image en niveaux de bits ;
détermination d'une métrique pour chacune desdites au moins deux zones ; et
utilisation d'au moins un rapport de ladite métrique respective pour rendre une décision quant à ce qu'une perte d'insertion dudit connecteur de fibre optique dépasse ou non une perte d'insertion maximale autorisée.

11. Procédé de la revendication 10, dans lequel ladite décision quant à ce que ladite perte d'insertion dudit connecteur de fibre optique (100) dépasse ou non ladite perte d'insertion maximale autorisée est basée sur une probabilité statistique.

12. Procédé de la revendication 7, dans lequel ladite étape d'utilisation de ladite caméra numérique (202) pour déterminer ladite au moins une caractéristique de ladite épissure (103) comporte en outre l'évaluation de la lumière rayonnant depuis ladite fibre de terrain (102) s'étendant au-delà dudit connecteur de fibre optique (100) et/ou de la lumière rayonnant depuis un adaptateur qui couple ladite source de lumière (201) audit connecteur de fibre optique.

FIG.1

EP 3 218 752 B1

FIG.2

Start

302 — Turn Light Source, camera & electronic circuitry ON

303 — Camera system images scattered light continously

304 — Insert prepared field fiber into distal end of test connector

305 — Image Analysis verifies minimum IL conditions

No → 306 — Remove fiber and repeat field fiber preparation

Yes

307 — Cam mechanical splice

308 — Remove connector from test apparatas

Stop

FIG.3

FIG.4

EP 3 218 752 B1

IL = 3.46dB

FIG.5B

IL = 1.38dB

FIG.5D

IL = 22.27dB

FIG.5A

IL = 1.77dB

FIG.5C

17

IL = 1.2dB

FIG.5E

IL = 0.98dB

FIG.5F

IL = 0.81dB

FIG.5G

IL = 0.58dB

FIG.5H

EP 3 218 752 B1

FIG.5I

FIG.5J

FIG.5K

FIG.5L

```
                    ┌─────────────┐
                    │    Start    │
                    └─────────────┘
                           │
                           ▼
         ┌──────────────────────────────┐
  402 ───│       Capture images         │
         └──────────────────────────────┘
                           │
                           ▼
         ┌──────────────────────────────┐
  403 ───│       Select RGB Band        │
         └──────────────────────────────┘
                           │
                           ▼
         ┌──────────────────────────────┐
  404 ───│    Select Region of          │
         │       Interest               │
         └──────────────────────────────┘
                           │
                           ▼
         ┌──────────────────────────────┐
  405 ───│    Convert Image to          │
         │    bit level patterns        │
         └──────────────────────────────┘
                           │
                           ▼
         ┌──────────────────────────────┐
  406 ───│    Calculate Needed          │◄──────────────┐
         │       Metrics                │               │
         └──────────────────────────────┘               │
                           │                        408  │
                           ▼                             │
                    ◇─────────────◇          ┌────────────────────────┐
                   ╱   Perform logic  ╲  No   │  Remove fiber and      │
            407 ──╱      $D > T_D$      ╲─────►│  repeat field fiber    │
                  ╲                    ╱       │  preparation           │
                   ◇─────────────────◇        └────────────────────────┘
                           │
                          Yes
                           ▼
                    ┌─────────────┐
                    │    Stop     │
                    └─────────────┘
```

FIG.6

IL = 3.46dB

FIG.7B

IL = 22.27dB

FIG.7A

IL = 1.38dB

FIG.7D

IL = 1.77dB

FIG.7C

IL = 0.98dB

FIG.7F

IL = 1.2dB

FIG.7E

IL = 0.58dB

FIG.7H

IL = 0.81dB

FIG.7G

IL = 0.42dB

**FIG.7I**

IL = 0.26dB

**FIG.7J**

IL = 0.18dB

**FIG.7K**

IL = 0.06dB

**FIG.7L**

EP 3 218 752 B1

IL = 3.46dB

S(x)

U(x)

FIG.8B

IL = 22.27dB

S(x)

U(x)

FIG.8A

IL = 1.38dB

S(x)

U(x)

FIG.8D

IL = 1.77dB

S(x)

U(x)

FIG.8C

IL = 1.2dB

S(x)

U(x)

**FIG.8E**

IL = 0.98dB

S(x)

U(x)

**FIG.8F**

IL = 0.81dB

S(x)

U(x)

**FIG.8G**

IL = 0.58dB

S(x)

U(x)

**FIG.8H**

IL = 0.42dB

FIG.8I

IL = 0.26dB

FIG.8J

IL = 0.18dB

FIG.8K

IL = 0.06dB

FIG.8L

EP 3 218 752 B1

FIG.9A

FIG.9B

FIG.9C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62077433

- US 2011122401 A1